# EUROPEAN PATENT APPLICATION

(11) **EP 4 053 029 A1**
(43) Date of publication of application: **07.09.2022**
(21) Application number: 22159117.5
(22) Date of filing: 28.02.2022
(51) Int. Cl.: B65D 1/34, B32B 7/06, B32B 7/14, B32B 37/30, B31B 50/00, B32B 27/10, B32B 27/32, B32B 27/36

(54) **RECYCLABLE TRAY WITH AIRTIGHT SEALING, METHODS OF PRODUCTION AND USES ASSOCIATED**

(30) Priority: 01.03.2021 GR 20210100121
(71) Applicant: Panagiotopoulos, Dimosthenis, 16344 Ilioupoli (GR); Panagiotopoulos, Panagiotis, 11635 Athens (GR)
(72) Inventor: Panagiotopoulos, Dimosthenis, 16344 Ilioupoli (GR); Panagiotopoulos, Panagiotis, 11635 Athens (GR)
(74) Representative: Samuelides, Emmanuel

(57) **Abstract**

A tray for the preservation and/or heating of products, with two layers, i.e. one external layer (11) and one interior film (12). The external layer (11) has an uninterrupted edge. Both layers are joined together in specific points and/or areas (17) and there are certain areas of the external layer (11) and the interior film (12) between the points and/or the areas that are joined together (17), where the external layer (11) and the film (12) are opposite to each other without being joined. The tray is produced in vacuum or by spot connection. The method of the production allows producing any shape of tray, as the plane element is one continuous element with no slits lateral to its edges.

## Description

The invention concerns recyclable trays with airtight sealing. These trays are suitable for airtight sealing and protection of products, in particular edible products. The invention also concerns recyclable thermoformed press trays.

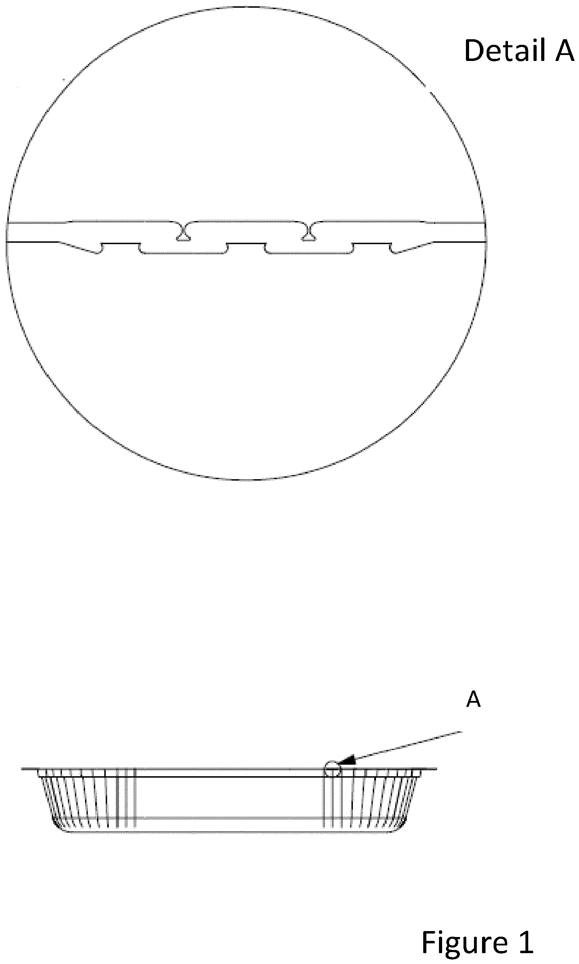

Known trays are made of cardboard, with an interior plastic coating. This coating is made with the PET, PP extruding method. The method of connection of the two materials results in the cardboard and coating becoming a compact body and their separation for recycling, after their use, is difficult, or even impossible. Furthermore, known thermoformed press trays have folds at the angles and folds starting from their base and ending at the rim. Those folds create several gaps, also referred to as capillary tubes, which create tightness problems in the tray's sealing with the lid. Known trays with capillary tubes are presented in Figure 1 - the folds at the rim are shown in detail A.

The aim of the invention is to address the problems with known trays. Another aim of the invention is to develop trays that are tight and able to preserve edible products for a long period of time. A further aim of the invention is to develop trays that are capable to withstand food preparation temperatures. A further aim of the invention is to develop trays that are recyclable. A further aim of the invention is a method of production of such trays.

The invention is defined by independent claims. Dependent claims describe additional features, adding further advantages to the invention.

A tray for the preservation and/or heating of products, in accordance with the invention, comprises two layers, i.e. one external layer and one interior film. The external layer has an uninterrupted edge. The two layers are joined together in specific points and/or areas and there are certain areas of the external layer and the interior film between the points and/or the areas that are joined together, where the external layer and the film are opposite to each other without being joined. Such trays may be of various shapes and sizes.

The tray has a bottom, a continuous lateral wall with an uninterrupted edge and a plane continuous rim. Preferably, there is a raised fin of the film with two free sides at the rim. The lateral wall and the rim is a continuous element with no slits or cuts at their edges, so that there is no need to connect adjacent sides of the lateral wall as it is the case with known trays.

In accordance with the invention, a two-layer tray production method using a plane element and a film, consists of the following steps: a) selecting of areas on the plane element, where the plane element and the film are to be connected, b) configuring the plane element in a three-dimensional main layer of the tray, c) creating of vacuum for the film's suction in the main layer, d) connecting the main layer and the film at the said selected areas, whereby there are surfaces between said selected areas, where the main layer and the film are not joined together. Alternatively the method steps are: a) selecting of areas on the plane element, where the plane element and the film are to be connected, b) forming a composite plane element from the plane element and the film by joining the plane element and the film at said selected areas, whereby there are surfaces between said selected areas, where the plane element and the film are not joined together, c) configuring the composite plane element in a three-dimensional tray

The method of the invention allows producing any shape of tray, as the plane element is one continuous element with no slits lateral to its edges, which are common to known trays.

The trays are suitable for packaging, protection and transfer of ready and raw foodstuffs-food. These trays with the respective materials are suitable for food preservation in the freezer-refrigerator, for example in temperatures as low as -37°C, as well as for reheating and/or baking food in them up to +200°C for one hour. They are sealed for foodstuff preservation with modified atmosphere packaging (MAP) and they are 100% recyclable.

The film is made of polymer plastic, preferably of polyethylene terephthalate (PET), polypropylene (PP), polyethylene (PE) or another material suitable for baking temperatures. The tray has been subject to respective processing during production, such that the final consumer has the possibility after its use to easily separate the plastic film from the main layer. Both materials are 100% recyclable.

The tray production procedure is developed so as to ensure airtight sealing impermeability with a respective lid, giving the trays the possibility to preserve foodstuffs for longer periods of time.

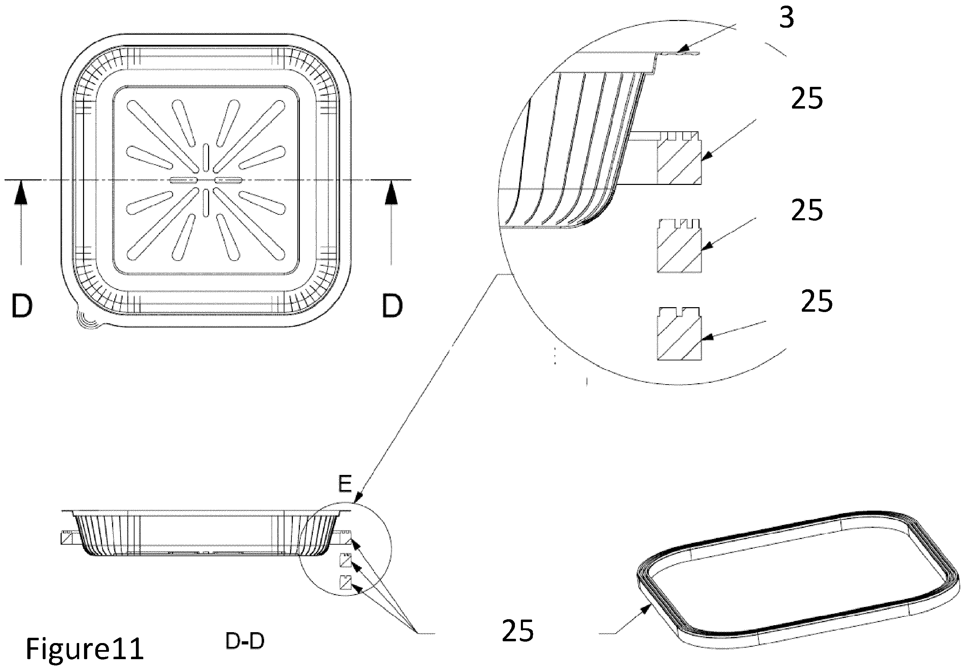

A description of tray examples and their production follows with reference to Figures 1 to 11, which:
Figure 1 shows a known tray with folds on its rim
Figure 2 shows a plan view of a tray without lid
Figure 3 shows a tray without lid in perspective view
Figure 4 shows a tray in perspective view during the separation of the film from the main body
Figure 5 shows the plane element before the formulation into three-dimensional tray
Figure 6 the shows a plane element with scores
Figure 7 shows the base/mold where suction and bonding occcurs
Figure 8 shows the base with the main tray layer of the tray
Figure 9 shows the base with the tray with the film
Figure 10 illustrates the final stage of the production of the tray
Figure 11 shows the rings used to configure the rim

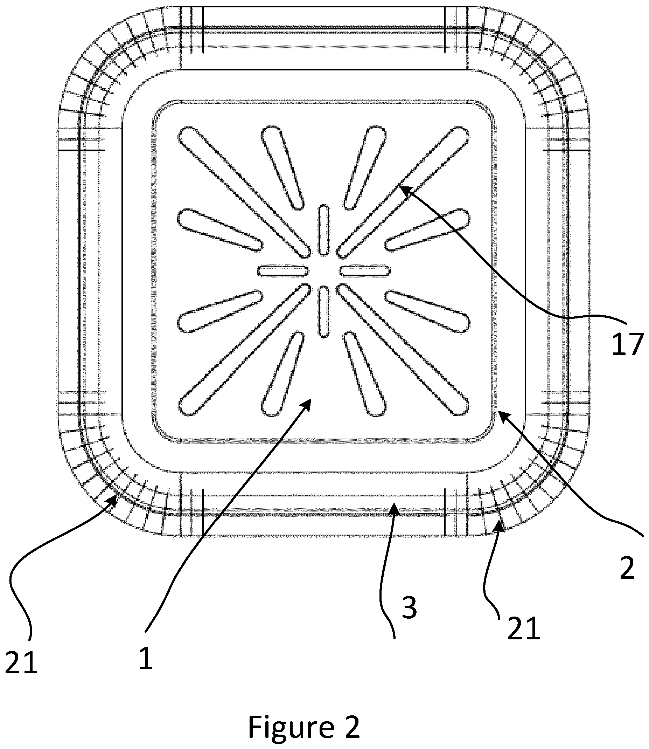

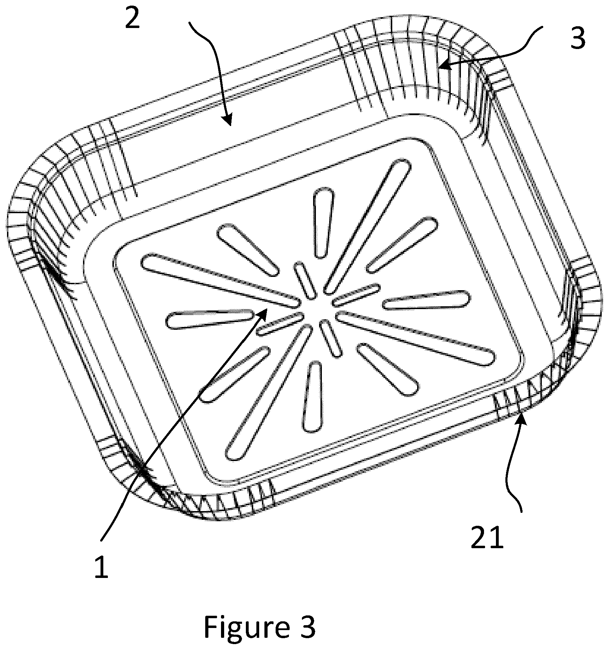

Figures 2 and 3 show a tray without lid. The tray is made from a plane composite element - multilayer - with one main layer and a film. In certain examples, the layer is of paper and the film is made of plastic, for example of polyethylene terephthalate (PET), polypropylene (PP), polyethylene (PE) or another material suitable for baking temperatures. The tray has a bottom (1), a lateral side (2) extending laterally from the bottom (1) and a rim (3) along the edge of the lateral side.

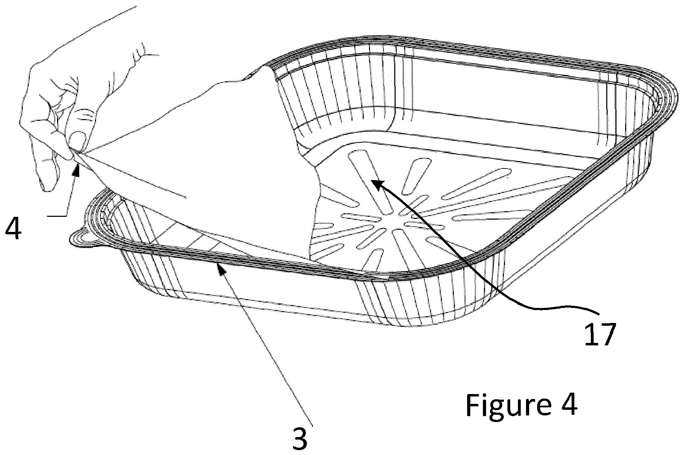

As shown in Figure 4, at one semi-circular edge of the rim (3), there is an element, i.e. raised fin (4), with an indication, such that if the user pulls the film, it will easily separate from the main layer.

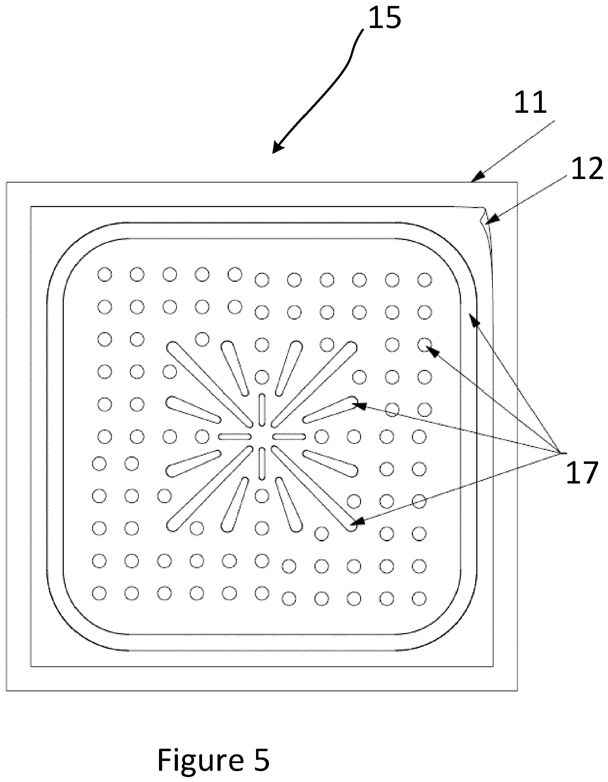

Examples of the production method according to the invention, of the tray, follow with reference to Figures 5 to 10. The examples are designated as "tray production method with spot-connection" and "tray production in vacuum".

### Tray production method with spot-connection

A) The one side of a plane element preferably cardboard, i.e. the material that will be the main layer (11) of the tray, is coated with varnish in preselected points or areas (17). The coating agent is suitable for use on edible product packages and it is used to connect the plane element with the film as described below next step.
B) The interior film is placed (laminate) (12) on the one side of the plane element. The film may be of PET, PP, PE or any suitable material as shown in Figure 5. The film (12) is attached to the preselected points (17) on the main layer (11). The film's (12) attachment to the main layer (11) may be done with the use of agent suitable for use in edible product packaging and by applying it on the selected points (17), for example areas of the cardboard that will be formed into the lateral side (2), the bottom (1) and the rim (3) of the tray, so as to allow surfaces between the film (12) and the main layer (11), which are between the preselected points or areas (17) to contact each other without being joined or bonded together. In this way, a composite plane element (15) is created, including the paper main layer (11) and the membrane (12).
C) The composite plane element (15) is cut and folds/scores (21) are configured. A fin (4) is further formed. The fin (4) has two free sides to facilitate the user to despatch the film from the mail layer.
D) The composite plane element (15) is placed in the forming machine, which is not shown in the Figures, so as to configure it in a three-dimensional tray.
E) Processing of the rim (3), by crushing from the bottom of the folds/scores so that any gaps are closed. Crushing takes place with pressure and/or heat, with one or more rings (25) with different width and surface. By such processing, a smooth surface is achieved on the top of the rim (3), so that after the product is placed in the tray proper airtight fusing with the lid is achieved.

### Tray production in vacuum

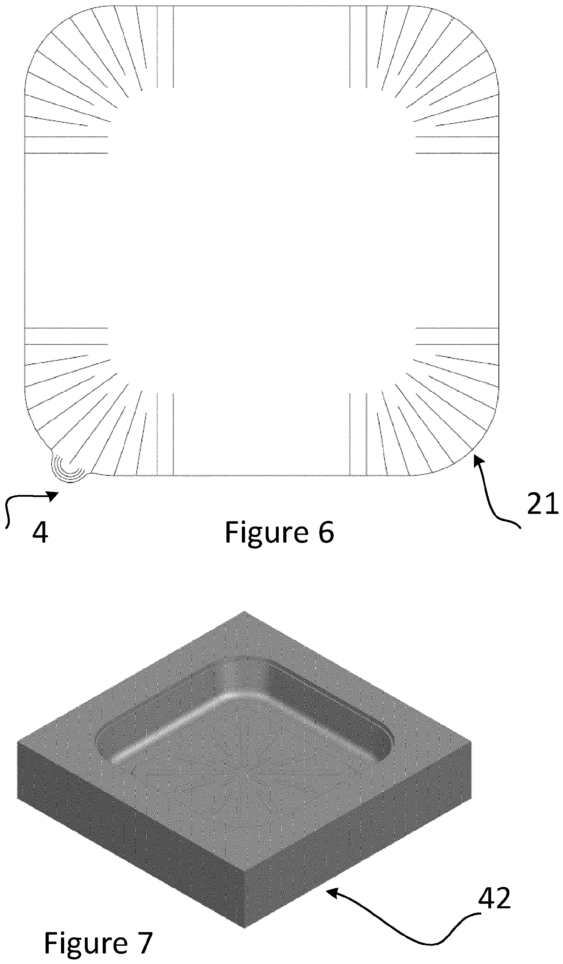

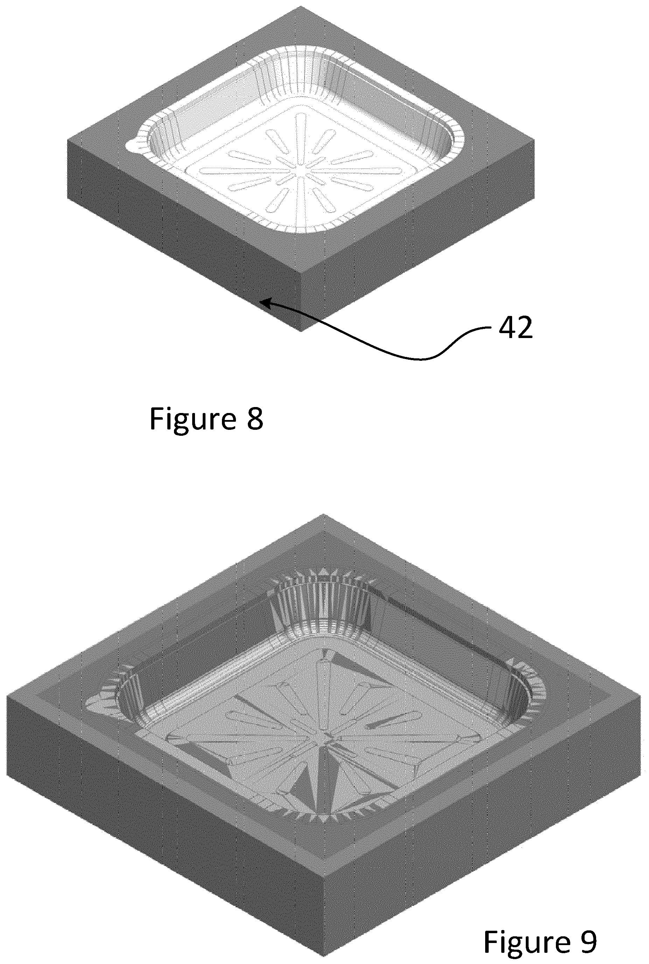

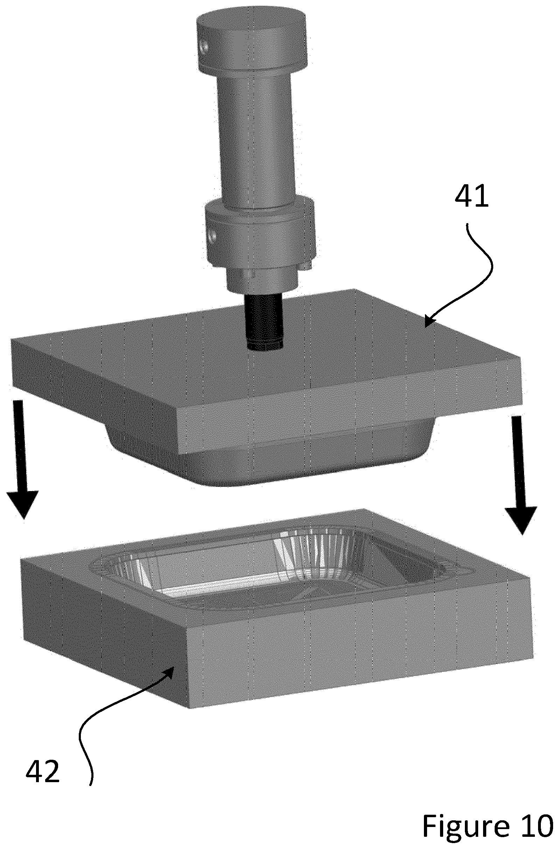

A) The interior side of a plane element, preferably cardboard, i.e. the material that will be the main layer (11) of the tray, is coated with varnish in preselected points or areas (17). The coating agent is suitable for use on edible product packages and it is used to connect the plane element with the film as described below next step.
B) The plane element is cut and folds/scores (21) are configured.
C) The plane element is processed in a forming machine not shown in the Figures, so that to obtain the three-dimensional main layer (11) of the tray. It is noted that the coating agent may be also applied after the forming in a three-dimensional form instead as described in step A).
D) The main layer (11) is placed on the base (mold) of the film suction machine, shown in Figure 7. In Figure 8, the main layer (11) is shown on the base of the machine.
E) The interior film (12) -which may be of PET, PP, PE or any other suitable material, is placed, for example in form of a roll, on the main layer (11), that is the side facing its internal bottom (1). Then the film (12) is suctioned in the internal part of the main layer (11), creating a vacuum. The film (12) touches by suction the main layer and acquires slight adhesion with it (Figure 9).
F) After that, pressure and/or heat are applied for the film's (12) final connection to the main layer (11) at the preselected points or areas (17) and the tray is produced with the machine shown in Figure 10. At the same time, the film (12) is cut along its perimeter: the paper tray, together with the formed film, is pressed in a female mould (42) by a male heated piston (41), as shown in Figure 10. The piston (41) has an integrated cutter knife in the external perimeter. With this procedure, the film's connection at the predefined points (17) of the main layer (11), as well as simultaneous cut of the film (12) around the rim (3) is achieved. By cutting the film (12), the fin (4) with the two free sides is defined on the rim (3). The fin (4) facilities the user to pull the film (12) from the main layer (11), so that the two layers may be separated as recyclable waste. The separation is facilitated, since, with the followed production procedure, there are areas between the film (12) and the main layer (11) that are not joined or bonded on each other.
G) Processing of the rim (3), by crushing from the bottom of the folds/scores so that any gaps are closed. Crushing takes place with pressure and/or heat, with one or more rings (25) with different width and surface. By such processing, a smooth surface is achieved on the top of the rim (3), so that after the product is placed in the tray proper airtight fusing with the lid is achieved.

Both production procedures described above achieve the film's connection at the predefined points (17) of the main layer (11).

After the products are placed in the tray, the lid is placed. The lid may be a fused film or a laminated film on cardboard. Following the above processing of the tray and fusing of the tray and lid, 100% airtightness and suitability of the tray for the preservation of foodstuffs for long periods of time are achieved.

## Claims

1. Tray for the preservation and/or heating of products, with two layers, i.e. one external layer (11) and one interior film (12), **characterised in that** the external layer (11) has an uninterrupted edge, **in that** the two layers are joined together in specific points and/or areas (17) and there are certain areas of the external layer (11) and the interior film (12) between the points and/or the areas that are joined together (17), where the external layer (11) and the film (12) are opposite to each other without being joined.

2. Tray according to claim 1, whereby the external layer (11) is of paper material.

3. Tray according to claim 1 or 2, whereby the film (12) is made of polymer plastic, preferably of polyethylene terephthalate (PET), polypropylene (PP), polyethylene (PE) or another material suitable for baking temperatures.

4. Tray according to any claim 1 to 3, with a bottom (1), a continuous lateral wall (2) and one plane rim (3).

5. Tray according to claim 4, whereby on the bottom (1) there are certain areas of the external layer (11) and the interior film (12) between the points and/or the areas that are joined together (17), where the external layer (11) and the film (12) are opposite to each other without being joined.

6. Tray according to any claim 1 to 5, whereby on the rim (3) there is a fin (4) of the film (12) with two free sides.

7. Method of production of a tray with two layers for preserving and/or heating products, using a plane element with an uninterrupted edge and one film (12), including the following steps: a) selecting of areas (17) on the plane element, where the plane element and the film (12) are to be connected, b) configuring the plane element in a three-dimensional main layer (11) of the tray, c) creating of vacuum for the film's suction (12) in the main layer (11), d) connecting the main layer (11) and the film (12) at the said selected areas (17), whereby there are surfaces between said selected areas (17), where the main layer (11) and the film (12) are not joined together.

8. Method of production of a tray with two layers for preserving and/or heating products, using one plane element with an uninterrupted edge, and one film (12), including the following steps: a) selecting of areas (17) on the plane element, where the plane element and the film (12) are to be connected, b) forming a composite plane element (15) from the plane element and the film (12) by joining the plane element and the film (12) at said selected areas (17), whereby there are surfaces between said selected areas (17), where the plane element and the film (12) are not joined together, c) configuring the composite plane element (15) in a three-dimensional tray.

9. Method according to claim 7 or 8, comprising the application of bonding agent or varnish coating at the said selected areas (17).

10. Method according to any claim 7 to 9, whereby the three-dimensional tray has a bottom (1), a lateral wall (2) and a rim (3) with folds (21).

11. Method according to with claim 10, comprising compressing the folds (21), which are configured on the rim (3) with one or more rings (25).

12. Method according to any claim 6 to 11, whereby the plane element is made of paper material.

13. Use of a tray according any claim 1 to 6, including heating of the tray at 200 °C for at least one hour.

14. Use of a tray according any claim 1 to 6, including storing the tray at temperatures that are lower than -30 °C.
